# EUROPÄISCHE PATENTSCHRIFT

(11) **EP 1 120 695 B1**
(45) Veröffentlichungstag und Bekanntmachung des Hinweises auf die Patenterteilung: **07.05.2008**
(21) Anmeldenummer: 01101523.7
(22) Anmeldetag: 24.01.2001
(51) Int. Cl.: G05B 19/418, G05B 19/042, G05B 19/05

(54) **Verfahren zur Erfassung, Übertragung und Speicherung von Zuständen elektrischer Schaltgeräte**
Method for collating, transmitting and storing states of electrical devices
Méthode de collecte, de transmission et de stockage d'états de dispositifs électriques

(30) Priorität: 25.01.2000 AT 1002000
(43) Veröffentlichungstag der Anmeldung: 01.08.2001
(73) Patentinhaber: Wieland, Martin, 6372 Oberndorf (AT)
(72) Erfinder: Wieland, Martin, 6372 Oberndorf (AT)

(56) Entgegenhaltungen:
- EP-A1- 0 917 034
- WO-A1-97/26587
- WO-A1-99/13388
- DE-A1- 4 201 361
- DE-A1- 4 413 836
- DE-A1- 19 617 181
- DE-C1- 19 742 525
- US-A- 5 586 259

## Beschreibung

Die Erfindung bezieht sich auf ein Verfahren zur Erfassung, Übertragung und Speicherung von Zuständen elektrischer Schaltgeräte an einen mit einem Standardnetzwerk (9) mit TCP/IP Protokoll verbundenen Computer (10). Der Erfindung liegt die Aufgabe zugrunde, Schaltzustände, digital und/oder analog vorliegende Informationen mit minimalem Aufwand in ein Standardnetzwerk einzuspeisen und auf einem mit einem Standardnetzwerk (9) verbundenen Computer (10) zur weiteren Verarbeitung zur Verfügung zu stellen. Des weiteren sollten am Computer (109 eingegebene Informationen über das Standardnetzwerk (9) in die angeschlossenen SPS-Steuerungen (1) transportiert werden um dort entweder Schaltzustände an SPS Ausgängen hervorzurufen oder Werte in Adressbereichen der SPS abzuspeichern welche den Programmablauf der SPS (1) steuern.

Eine bekannte Lösung dieser Aufgabenstellung basiert zwar ebenfalls auf der Verwendung von SPS Steuerungen zur Pegelabfrage des Eingangssignals allerdings werden die erfassten Werte in einen Adressbereich der Steuerung abgelegt von welchem sie durch ein übergeordnetes System abgefragt werden können (Polling). Da bei dieser Art der Abfrage die SPS Steuerung passiv ist und die Abfrage der anliegenden Werte sehr schnell erfolgen muß erfolgt dies üblicherweise mit speziellen MAP Netzwerken (DE 19617181 A1, US 5586259, DE 4201361) welche speziell zur Verbindung von SPS Steuerungen ausgelegt sind (MAP, PROFIBUS, CANBUS, L1 L2 L3). Nachteil dieser Lösungen sind, daß ein zum Standardnetz getrenntes Subnetz aufgebaut werden muß welches vom Standardnetz nicht eingesehen und überwacht werden kann und in welches nur Geräte des gleichen Herstellers oder dazu kompatible eingebaut werden können.

Eine weitere Variante ist der Einsatz von speziellen Einheiten (DE 19742525) welche selbst mit Aktuatoren, Sensoren und einem Netzwerkchip ausgerüstet sind und die Änderung des Pegels eines Eingangssignals als Datenpaket direkt in das Netzwerk einspeisen. Neben der nicht vorhandenen Möglichkeit zur Festlegung und Ausführung von logischen Schleifen in der Baugruppe selbst (z.B. Sende Datenpaket n nur wenn Signal 2=high und Signal 4=high) oder der Kombination mehrerer Signaleingänge zu einem Wert (Signal 1=high und Signal 5=high alle anderen sind low ergibt den Buchstaben A im Datenpaket kann diese Technik auch nicht mit Produkten anderer Hersteller zu einer Lösung kombiniert werden da das Datenformat des TCP/IP Datenpakets fest programmiert ist.

Eine weitere Variante ist der Einsatz von SPS Baugruppen mit einer eingebauten Netzwerkkarte. Nachteil ist hier, daß für den Netzwerkzugang selbst eine herstellerspezifische Programmierung vorgenommen werden muß und sich nicht mehrere räumlich getrennte SPS-Steuerungen einen Netzwerkanschluß teilen können. Abgesehen von den hohen Kosten können sich auch keine SPS-Steuerungen verschiedener Hersteller einen Netzwerkanschluß teilen.

Eine weitere Variante ist der Einsatz eines eigenen Rechners an jedem Erfassungsort welcher mit einer digitalen Ein/Ausgangskarte und einer Netzwerkkarte ausgerüstet ist. Abgesehen von den hohen Kosten einer solchen Lösung muß dieser Erfassungsrechner mit einem Betriebssystem und einem Anwendungsprogramm ausgerüstet sein deren Nachteile im Hinblick auf Stabilität und Wartung aus den Argumenten der "SPS-Welt" hinlänglich bekannt sind.

### Figurenübersicht

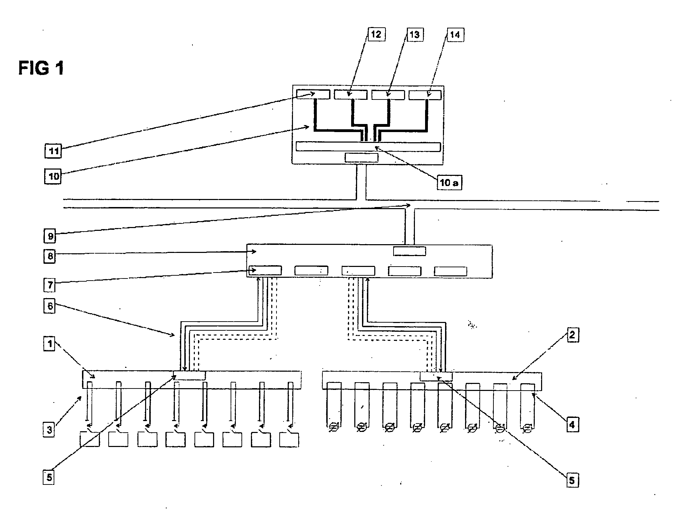

FIG 1 zeigt die Anordnung der Komponenten des Erfindungsgegenstandes und deren Verbindung zueinander.

In der vorliegenden Erfindung wurde die Aufgabe durch die Anordnung und das Verfahren gemäß Anspruch 1, 2, 3, und 4 gelöst. Zur Erfassung und Interpretation der Signalpegel der elektrischen Schaltgeräte werden dabei speicherprogrammierbare Steuerungen (SPS) (1) verschiedener Hersteller eingesetzt welche zusätzlich zu digitalen (3) oder analogen (4) Ein- und Ausgängen mit einer seriellen Schnittstelle (5) ausgerüstet sind. Die SPS (1) wird so programmiert, daß sie die Pegel der Signaleingänge (3) (4) zyklisch abfragt und den erfassten Wert in einen logischen Wert umwandelt und in einem dem jeweiligen Eingang zugeordneten Adressbereich speichert. Der erfasste und gespeicherte Wert wird von der SPS entweder sofort in eine Zeichenkette umgewandelt welche den Namen der SPS, den meldenden Eingang und den Wert enthält oder der Wert wird mit einem bereits gespeicherten Wert verglichen und die Zeichenkette wird nur bei einer Überschreitung eines festgelegten Deltas generiert. Die generierte Zeichenkette wird über die serielle Schnittstelle (5) der SPS ausgegeben.

Auch können von der SPS (1) mehrere zum gleichen Zeitpunkt digital anliegende Werte logisch zu einem Zeichen kombiniert werden (z.B 10010000 wird als "A" in die Zeichenkette eingefügt). Des weiteren können zur permanenten Prozessüberwachung von der SPS alle Eingänge (3) (4) zyklisch gelesen, kombiniert und ohne einen Vergleich mit den Werten im Adressbereich seriell ausgegeben werden.

Wird eine SPS Steuerung mit analogen Eingängen (4) eingesetzt wird die anliegende Spannung als Wert interpretiert und in den zugeordneten Adressbereich geschrieben und verglichen bzw. sofort seriell ausgegeben.

Die serielle Schnittstelle der SPS (5) ist mit einer Datenleitung (6) mit der seriellen Schnittstelle (7) eines Terminalservers (8) verbunden welcher die eintreffende Zeichenkette in ein TCP/IP Datenpaket verpackt.

An einen Terminalserver (8) üblicher Bauart können im Umkreis von 15 Metern bis zu 64 SPS-Steuerungen angeschlossen werden.

Dem Datenpaket wird vom Terminalserver (8) die IP Adresse des Absenders (Terminalserver) und des Empfängers (Leitrechner) beigefügt. Dieses Datenpaket wird zu dem Rechner gesandt welcher die IP-Adresse des Empfängers besitzt.

Das Gerätetreiberprogramm (10a) am empfangenden Rechner (10) entpackt das TCP/IP Datenpaket wieder in eine Zeichenkette, fügt dieser Datum und Uhrzeit hinzu und schreibt diese Information in den, einer zuvor definierten virtuellen seriellen Schnittstelle zugeordneten Speicherpuffer (11) ( Eingangspuffer ). Dadurch können die Informationen mit jeder Anwendung welche auf seriell empfangene Daten zugreifen kann weiterverarbeitet werden.

Alternativ dazu können die Zeichenketten vom empfangenden Rechner auch in andere vorgegebene Speicherbereiche geschrieben werden. Durch die Ausgabe der Zeichen in diese Speicherbereiche kann die Ausgabe der Zeichenketten in andere Medien wie Textdateien, (12) Datenbanktabellen (14) oder ODBC Datenquellen (13) erfolgen.

Datenpakete welche vom Leitrechner (10) mit dem Gerätetreiberprogramm (10a) an einen Terminalserver (1) gesendet werden werden von diesem entpackt und auf die, im Datenpaket angegebene serielle Schnittstelle (7) des Terminalservers ausgegeben. Diese Information wird von der angeschlossenen SPS Steuerung über deren serielle Schnittstelle (5) empfangen, in den in der Zeichenkette enthaltenen Speicherbereich geschrieben. Diese Speicherinformation kann einerseits einen digitalen Ausgang der SPS-Steuerung (3) auf "high" oder "low" setzen und so einen Schaltvorgang auslösen, andererseits kann durch das Schreiben dieses Wertes in den Speicherbereich welcher einem digitalen (3) oder analogen (4) SPS Eingang zugeordnet ist auch ein neuer Vergleichswert gesetzt werden welcher von der Steuerung (1) wiederum mit den Eingangswerten verglichen wird und zu einer Zeichenkettenausgabe führen kann.

## Patentansprüche

1. Verfahren zur Erfassung, Übertragung und Speicherung von Schaltzuständen elektrischer Schaltgeräte und Signalquellen an einen mit einem Standardnetzwerk (9) mit TCP/IP Protokoll verbundenen Computer (10), wobei eine speicherprogrammierbare Steuerung (SPS)(1,2) mit mindestens einem digitalen (3) und/oder analogen Eingang (4) und mindestens einer seriellen Schnittstelle (5) die Pegel der Signaleingänge (3,4) zyklisch abfragt, sie als Wert interpretiert und in einem dem jeweiligen Eingang zugeordneten Adressbereich speichert **dadurch gekennzeichnet,**
- **dass** die SPS (1,2) zyklisch oder bei Signalpegeländerungen eine Zeichenkette generiert welche die erfassten, gespeicherten, kombinierten oder mit bereits gespeicherten Werten verglichenen Werte enthält und diese über die serielle Schnittstelle (5) der SPS an die serielle Schnittstelle (7) eines Gerätes zur Verpackung einer Zeichenkette in ein TCP/IP Datenpaket, einem Terminalserver (8) ausgibt,
- **dass** die Zeichenkette beim Eintreffen am Terminalserver (8) durch den Terminalserver in ein Datenpaket verpackt wird welchem vom Terminalserver die IP Adresse des Terminalservers und des Computers (10) beigefügt wird,
- **dass** das Datenpaket über das Netzwerk (9) zu dem Computer gesandt wird welcher die IP Adresse des Computers besitzt und
- **dass** ein Gerätetreiberprogramm (10a) am empfangenden Computer das Datenpaket wieder in eine Zeichenkette entpackt und diese Information in den, einer zuvor definierten virtuellen seriellen Schnittstelle zugeordneten Speicherpuffer (11) oder den, einer Anwendung zugeordneten Speicherbereich (12,13,14) schreibt.

2. Verfahren zum Schreiben von Informationen von einem mit einem Standardnetzwerk mit TCP/IP Protokoll verbundenen Computer (10) in einen Speicherbereich einer speicherprogrammierbaren Steuerung (1,2) (SPS) welche über eine seriellen Schnittstelle (5) mit der seriellen Schnittstelle (7) eines, mit einem Standardnetzwerk (9) mit TCP/IP Protokoll verbundenen Gerätes zur Verpackung einer Zeichenkette in ein TCP/IP Datenpaket, einem Terminalserver (8) verbunden ist, **dadurch gekennzeichnet,**
- **dass** durch Eingaben am Computer (10) durch ein Gerätetreiberprogramm (10a) mindestens ein Datenpaket erzeugt und zum Terminalserver (8) gesendet wird
- **dass** das Datenpaket beim Eintreffen am Terminalserver entpackt und als Zeichenkette über die, im Datenpaket angegebene serielle Schnittstelle des Terminalservers ausgegeben wird und
- **dass** diese Information von der angeschlossenen SPS Steuerung (1/2) über deren serielle Schnittstelle (5) empfangen und in den in der Zeichenkette enthaltenen Speicherbereich geschrieben wird.

3. Verfahren nach Anspruch 1 **dadurch gekennzeichnet, dass** der Zeichenkette welche durch das Gerätetreiberprogramm (10a) am empfangenden Leitrechner erzeugt wurde durch das Gerätetreiberprogramm Datum und Uhrzeit hinzugefügt werden.

## Claims

1. Method for the collection, transmission and storage of switching states of electrical switching devices and signal sources to a computer (10) which is connected to a standard network (9) with TCP/IP protocol where a programmable-logic-controller (PLC)(1,2) with at least one digital (3) and/or analog input (4) and at least one serial interface (5) cyclically polls the levels of the signal inputs (3,4), interprets them as a value and stores them to an address range which is assigned to the respective input **characterized in that**
- the PLC (1,2) cyclically or if the signal level changes generates a character string which contains the acquired, stored, combined or with already stored values compared values and transmits them by the serial interface (5) of the PLC to the serial interface (7) of a device for wrapping a character string into a TCP/IP data packet, a terminal server (8),
- at the arrival of the character string at the terminal server (8) the character string is wrapped into one data packet by the terminal server which adds the IP address of the terminal server and the computer (10),
- the data packet is sent over the network (9) to the computer which has the IP address of the computer and
- a device driver program (10a) at the receiving computer again unwraps the data packet into a character string and writes this information into the memory buffer (11) which is assigned to a previously defined virtual serial port or a memory area (12,13,14) which is assigned to an application.

2. Method for writing information's from a computer (10) that is connected to a standard network with TCP/IP protocol to a memory area of a programmable-logic-controller (PLC)(1,2) which is connected by a serial interface (5) to the serial interface (7) of a device for wrapping a character string into a TCP/IP data packet that is connected to a standard network (9) with TCP/IP protocol, a terminal server (8), **characterized in that**
- input at the computer (10) causes a device driver program (10a) to generate at least one data packet and send it to the terminal server (8)
- at the arrival of the data packet at the terminal server the data packet is unwrapped and sent out as a character string by the serial interface of the terminal server as stated in the data packet and
- this information is received by the serial interface (5) of the connected PLC (1/2) and written to the memory area as specified in the character string.

3. Method which as defined in Claim 1 **characterized in that** the device driver program (10a) at the receiving master computer adds date and time information to the character string that was generated by the device driver program at the receiving master computer.

## Revendications

1. Procédé pour la saisie, la transmission et la mémorisation d'état de commutation de commutateurs électriques et de sources de signal vers un ordinateur (10) muni d'une connexion réseau (9) avec protocole TCP/IP où un automate programmable industriel (API) (1,2) avec au moins une entrée numérique (3) et/ou analogique (4) et au moins une interface série (5) consulte de manière cyclique les niveaux des signaux d'entrée (3,4), les interprète comme valeur et les mémorise dans l'un des espaces adressables qui est attribué à l'entrée respective, **caractérisé en ce que**
- l'API (1,2) génère de manière cyclique ou lors de changements de niveau du signal une suite de caractères contenant les valeurs collectées, mémorisées, combinées ou comparées à des valeurs mémorisées antérieurement et transmet ces valeurs à un serveur terminal (8) en passant par l'interface série (5) de l'API vers l'interface série (7) d'un appareil afin de compresser une suite de caractères en un paquet de données TCP/IP,
- - à l'arrivée de la suite de caractères au serveur terminal (8), la suite de caractères est compressée en un paquet de données par le serveur terminal qui y ajoute les adresses IP du serveur terminal et de l'ordinateur (10),
- - le paquet de données est transmis par le réseau (9) à l'ordinateur qui a l'adresse IP dudit ordinateur et
- - un programme pilote (10a) de l'ordinateur récepteur décompresse à nouveau le paquet de données en une suite de caractères et note cette information dans la mémoire tampon (11) d'une interface série virtuelle prédéterminée ou dans une zone de mémoire (12,13,14) qui est attribuée à une application.

2. Procédé pour l'écriture d'informations à partir d'un ordinateur (10) muni d'une connexion réseau standard avec protocole TCP/IP vers une zone de mémoire d'un automate programmable industriel (1,2) (API) connecté à un serveur terminal (8) en passant d'une interface série (5) à l'interface série (7) d'un appareil muni d'une connexion réseau standard avec protocole TCP/IP afin de compresser une suite de caractères en un paquet de données TCP/IP, **caractérisé en ce que**
- l'entrée de données sur l'ordinateur (10) a pour conséquence la création par un programme pilote (10a) d'au moins un paquet de données et l'émission de ce paquet vers le serveur terminal (8)
- à l'arrivée du paquet de données au serveur terminal, ledit paquet de données est décompressé et délivré comme une suite de caractères par l'interface série du serveur terminal prédéterminée dans le paquet de données et
- cette information est réceptionnée par l'API (1/2) connecté par l'intermédiaire de son interface série (5) et notée dans la zone de mémoire prédéterminée par la suite de caractères.

3. Procédé selon la Revendication 1 **caractérisé en ce que** le programme pilote (10a) de l'ordinateur hôte récepteur ajoute la date et l'heure à la suite de caractères qui a été générée par le programme pilote de l'ordinateur hôte récepteur.
